# FASCICULE DE BREVET EUROPEEN

(11) **EP 0 686 062 B1**
(45) Date de publication et mention de la délivrance du brevet: **08.01.1997**
(21) Numéro de dépôt: 94907589.9
(22) Date de dépôt: 17.02.1994
(51) Int. Cl.: B01J 8/06, C01B 3/38

(54) **REACTEUR THERMIQUE A TUBE A PASSAGE DIRECT DE COURANT**
THERMISCHER ROHRREAKTOR MIT EINEM DIREKTEN DURCHGANG
THERMAL REACTOR WITH DIRECT PASSAGE TUBE FOR CURRENT

(30) Priorité: 24.02.1993 FR 9302101
(43) Date de publication de la demande: 13.12.1995
(73) Titulaire: SERTHEL, F-77410 Claye-Souilly (FR)
(72) Inventeur: BOURDET, Guy, F-77400 Saint Thibault Des Vignes (FR); LEBRIS, Alexis, F-93470 Coubron (FR)
(74) Mandataire: Jolly, Jean-Pierre
(86) Numéro de dépôt international: FR9400178
(87) Numéro de publication internationale: WO9419098

(56) Documents cités:
- EP-A- 0 439 614
- DE-A- 3 929 413
- US-A- 2 235 401
- PATENT ABSTRACTS OF JAPAN vol. 008, no. 067 (C-216)29 Mars 1984 & JP,A,58 219 945 (MATSUSHITA DENKI SANGYO KK) 21 Décembre 1983

## Description

L'invention concerne un réacteur thermique permettant d'effectuer une réaction chimique à des conditions de température précises et contrôlées, et en particulier un réacteur thermique délivrant une atmosphère chargée en carbone et à potentiel carbone déterminé pour le traitement thermique de pièces métalliques (trempe, carbonitruration ou cémentation) dans des fours adaptés.

De tels réacteurs, générateurs d'une atmosphère chargée en carbone dans les fours de traitement thermique sont connus. Ces réacteurs réalisent le craquage à une température déterminée d'un mélange de gaz entrant obtenu par un mélange d'air, et de méthane ou propane, en proportions variables, en un mélange gazeux chargé en carbone et notamment en monoxyde de carbone (CO) et hydrogène (H₂), constituant ladite atmosphère carbonée. Ces réacteurs utilisent une enceinte étanche formant réacteur ou cornue chauffée extérieurement à la température voulue, et dont le mélange gazeux de sortie riche en carbone est refroidi (réaction de trempe) avant de parvenir au four de traitement thermique. Ces réacteurs nécessitent une installation relativement encombrante, difficile à contrôler et relativement coûteuse en énergie du fait des pertes thermiques externes dues à l'enceinte de chauffage du réacteur et également du fait du réchauffage nécessaire des gaz produits, trempés lors de leur introduction dans le four.

On connaît par EP-A-0 439 614 un réacteur constitué d'une enceinte étanche et chauffée par des résistances électriques internes.

L'invention vise à remédier à ces inconvénients en proposant un réacteur thermique comportant une enceinte dans laquelle une réaction chimique est effectuée à des conditions de température déterminées, caractérisé en ce que ladite enceinte est constituée par un tube en matière métallique réfractaire formant résistance électrique par passage direct du courant dans le tube, de volume et matière compatibles avec l'application, alimenté de façon adéquate par ses bornes de connexion en courant (basse tension) en fonction de sa résistance électrique pour produire en son sein les dites conditions de température de réaction, ledit tube étant monté de façon étanche et isolée électriquement avec des moyens d'alimentation en produits de réaction et des moyens de sortie des produits issus de la réaction.

Naturellement, le tube peut contenir un catalyseur adapté à l'application envisagée et, par exemple, un catalyseur réfractaire à base d'oxyde de nickel, classique pour la production d'une atmosphère chargée en carbone dans les fours de traitement thermique.

Ledit tube à passage de courant est un tube en tôle roulée soudée ou coulée centrifugée, en alliage métallique résistant à la chaleur (réfractaire) et par conséquent de fabrication simple et peu coûteuse.

Des thermocouples de mesure de la température sont positionnés sur la longueur du tube de façon à déterminer précisément et localement le niveau de température exigé pour la réaction. Le niveau de température peut être commandé à un niveau variable et contrôlé aisément en faisant varier l'alimentation électrique du générateur de courant du tube.

Le tube est avantageusement entouré d'un revêtement isolant limitant les pertes thermiques externes, lesquelles sont minimes en raison du faible dimensionnement de l'ensemble du réacteur. Eventuellement, un passage pour un flux gazeux de refroidissement ou d'homogénéisation de température (air) peut être formé entre la paroi du tube et le revêtement isolant. Le débit du flux peut être régulé sur une consigne de température, au moyen d'un ventilateur commandé

Naturellement, le réacteur peut être disposé à l'extérieur du four ou laboratoire recevant les produits de la réaction, une conduite de sortie calorifugée reliant le tube au four, mais il peut encore être disposé à l'intérieur de celui-ci, contribuant ainsi directement à son chauffage. Il peut être monté dans une position de direction quelconque (verticale ou horizontale).

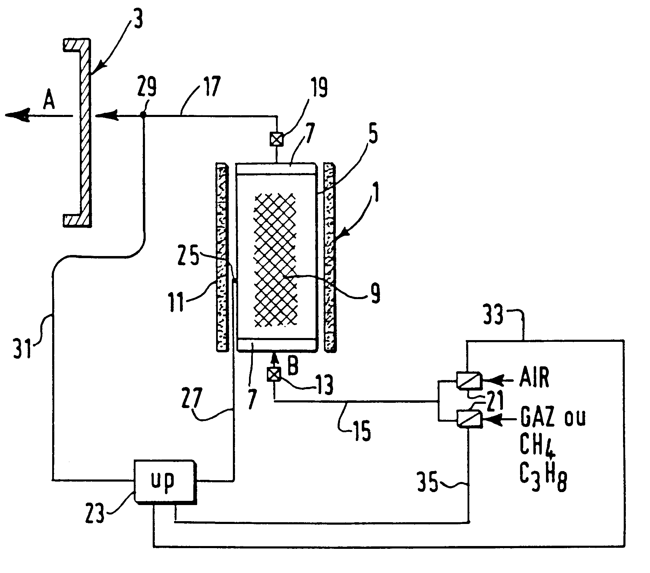

L'invention est expliquée ci-après à l'aide d'un exemple de réalisation et en référence au dessin annexé, sur lequel :
la figure unique est un schéma d'un réacteur conforme à l'invention.

Le réacteur 1 représenté est destiné à alimenter un four 3 de traitement thermique en un gaz ou atmosphère riche en carbone (selon flèche A). Il comporte une enceinte de réaction (5) proprement dite vers laquelle est acheminé au niveau inférieur un mélange gazeux (selon flèche B) constitué d'air et de méthane ou propane en proportion variable. L'atmosphère riche en carbone contenant en particulier les gaz (CO et H₂) sort au niveau supérieur pour parvenir jusqu'au four. L'enceinte est constituée par un tube à passage direct de courant, lequel est alimenté par des bornes de connexion 7 à ses extrémités au moyen d' un générateur de courant non représenté. Ce tube est d'une technologie connue, étant constitué à partir d'une tôle en acier réfractaire, à base d'alliage de nickel-chrome, roulée et soudée, éventuellement coulée centrifugée. Il résiste largement aux températures exigées pour le craquage des gaz d'entrée (inférieures à 1100°C) décomposés en hydrogène, azote, monoxyde de carbone, et dioxyde de carbone, vapeur d'eau et méthane (en faibles quantités), selon la proportion précitée des gaz d'entrée en air, en méthane ou propane. Ce tube peut avoir un diamètre de l'ordre de 100 mm et une longueur de 1500 mm. Il contient un catalyseur réfractaire 9 à base d'oxyde de nickel accélérant la réaction.

Il est parcouru par un courant de basse tension et à une intensité importante, de l'ordre de par exemple 1000 à 3000 A. Le tube est isolé thermiquement par un revêtement de calorifugeage externe 11. Un joint 13 isole électriquement la conduite d'entrée 15 du mélange gazeux au réacteur. De même, la conduite 17 de l'atmosphère carbonée de sortie est isolée par un joint analogue 19. La conduite d'entrée précitée est reliée à deux branches en parallèle alimentées respectivement en air et en gaz CH₄ ou C₃H₈. Le mélange final formé à partir de l'air et du gaz CH₄ ou C₃H₈ s'effectue à proportions variables, contrôlées au moyen de deux vannes à débit massique 21 sur chacune des branches précitées.

Le fonctionnement du réacteur s'effectue sous la commande d'une unité de commande, par exemple un microprocesseur 23 relié par diverses relations au tube de réacteur et pilotant ses organes d'alimentation. Les diverses relations sont constituées par les paramètres d'entrée au réacteur, proportions en air, et gaz CH₄ ou C₃H₈, déterminées sur les vannes à débits massiques 21, de réactions (température et catalyseur) et de sortie : consignes de potentiel carbone déterminées par les proportions de CO, CO₂, CH₄, et H₂O de l'atmosphère produite par le réacteur et exigée pour le traitement thermique dans le four.Ainsi, un thermocouple 25 appliqué sur la paroi du tube et relié en 27 au microprocesseur renseigne sur la température. Le potentiel carbone est contrôlé au moyen d'une sonde 29 disposée à la sortie de la conduite acheminant l'atmosphère carbonée au four et éventuellement au moyen d'une autre sonde (non représentée) disposée à l'intérieur du four ou laboratoire recevant des produits de réaction. Le signal correspondant de la sonde ou des sondes est envoyé au microprocesseur au moyen d'une liaison 31. Les vannes d'entrée 21 sont reliées en contrôle commandé au microprocesseur au moyen des liaisons 33 et 35. Le microprocesseur, en fonction des consignes précitées, régule la température du réacteur en commandant à un niveau approprié l'alimentation du générateur du tube (non représenté) ; de même il commande les débits des vannes à débit massiques précitées, ainsi que la proportion en gaz CH₄ ou C₃H₈ à l'entrée.

Le microprocesseur pourra également commander le brûlage des suies, sur des fréquences relativement rapprochées (pour éviter un dépôt excessif et donc une température excessive de brûlage) avec le contrôle simultané de la température palliant à toute détérioration par surchauffe du tube. Naturellement, d'autres paramètres de sécurité du réacteur, non spécifiques de la technologie du tube, liés au fonctionnement du four, peuvent également être pris en compte, tel que la gestion d'une amenée d'azote de sécurité pour le four et en fonction des défauts observés.

## Revendications

1. Réacteur thermique comportant une enceinte (5) dans laquelle une réaction chimique est effectuée à des conditions de température déterminées, caractérisé en ce que ladite enceinte (5) est constituée par un tube en matière métallique réfractaire formant résistance électrique par passage direct du courant dans le tube, de volume et matière compatibles avec l'application, alimenté de façon adéquate par ses bornes de connexion (7) en courant (basse tension) en fonction de sa résistance électrique pour produire en son sein les dites conditions de température de réaction, ledit tube étant monté de façon étanche et isolée électriquement en (13, 19) avec des moyens d'alimentation (15) en produits de réaction et des moyens de sortie (17) des produits issus de la réaction.

2. Réacteur thermique selon la revendication 1, caractérisé en ce qu'il comporte un élément catalyseur (9) de la réaction, par exemple un catalyseur réfractaire à base d'oxyde de nickel.

3. Réacteur thermique selon l'une des revendications 1 et 2, caractérisé en ce que ledit tube à passage de courant est un tube en alliage métallique résistant à la chaleur (réfractaire) en tôle roulée, soudée ou coulée centrifugée.

4. Réacteur thermique selon l'une des revendications précédentes, caractérisé en ce que des thermocouples de mesure de la température (25) sont positionnés sur la longueur du tube, de façon à déterminer précisément et localement le niveau de température exigé pour la réaction, le niveau de température étant commandé à un niveau variable et contrôlé en faisant varier l'alimentation électrique du tube.

5. Réacteur thermique selon l'une des revendications précédentes, caractérisé en ce que le tube (5) est entouré d'un revêtement isolant thermique (11) et qu'un passage pour un flux gazeux de refroidissement ou d'homogénéisation de température est formé entre la paroi du tube (5) et le revêtement isolant (11).

6. Réacteur thermique selon l'une des revendications précédentes, caractérisé en ce qu'il est disposé à l'intérieur ou à l'extérieur du four de traitement ou laboratoire recevant les produits de réaction, monté dans une direction quelconque (verticale ou horizontale).

7. Réacteur thermique selon l'une des revendications précédentes, caractérisé en ce qu'il est commandé en fonctionnement à un niveau variable par une unité de commande (23), qui, en fonction de consignes exigées pour l'atmosphère carbonée (potentiel carbone pour le traitement thermique) et déterminées par une ou des sonde(s) de mesure (29), régule le niveau de température au sein du tube (5) (mesuré par un thermocouple 25), l'alimentation du mélange gazeux d'entrée (via des vannes de régulation de débit 21) de chacun des composants gazeux, air et gaz méthane ou propane) et éventuellement des paramètres de maintenance (brûlage des suies à fréquence rapprochée) et de sécurité (amenée d'azote) pour l'extinction de la réaction en cas de défauts ou surchauffe.

## Claims

1. A thermal reactor comprising a chamber (5) in which a chemical reaction is affected under predetermined temperature conditions, characterised in that said chamber (5) consists of a tube of refractory metallic material creating electrical resistance through direct passage of currant in the tube and of a size and material compatible with the application, fed in suitable manner with (low voltage) current by its connection terminals (7) in accordance with its electrical resistance to produce within it said reaction temperature conditions, said tube being mounted in tight and electrically insulated manner at (13, 19) with means (15) for the supply of reactants and outlet means (17) for products of the reaction.

2. A thermal reactor according to claim 1, characterised in that it comprises a reaction catalyst element (9), for example a refractory catalyst with nickel oxide base.

3. A thermal reactor according to either one of claims 1 and 2, characterised in that said current passage tube is a tube of heat resistant (refractory) metal alloy in the form of a rolled, welded or centrifugally cast sheet.

4. A thermal reactor according to any one of the preceding claims, characterised in that thermocouples (25) for measuring the temperature are positioned over the length of the tube, in such a way as to determine precisely and locally the temperature level required for the reaction, the temperature level being controlled at a variable level by varying the electricity supply to the tube.

5. A thermal reactor according to any one of the preceding claims, characterised in that the tube (5) is surrounded by a thermally insulating covering (11) and in that a passage for a cooling or temperature homogenising gaseous flow is formed between the wall of the tube (5) and the insulating covering (11).

6. A thermal reactor according to any one of the preceding claims, characterised in that it is arranged inside or outside the treatment oven or laboratory receiving the reaction products and mounted in any direction (vertical or horizontal).

7. A thermal reactor according to any one of the preceding claims, characterised in that its variable level operation is controlled by a control unit (23), which, in accordance with reference values required for the carbonated atmosphere (carbon potential for thermal treatment) and determined by one or more measuring sensor(s) (29), regulates the temperature level within the tube (5) (measured by a thermocouple 25), the supply of the gaseous intake mixture (via flow regulation valves 21) of each of the gaseous components (air and methane or propane gas) and optionally maintenance parameters (frequent burning of soot) and safety parameters (nitrogen supply) to extinguish the reaction in the case of faults or overheating.

## Patentansprüche

1. Thermischer Reaktor mit einer Umhüllung (5), in welcher eine chemische Reaktion unter vorgegebenen Temperaturbedingungen abläuft, **dadurch gekennzeichnet**, daß die Umhüllung (5) aus einem Rohr aus metallischem hitzebeständigem Werkstoff besteht, welches bei direktem Stromdurchfluß in dem Rohr einen elektrischen Widerstand bildet, wobei dem ein mit dem jeweiligen Einsatzbereich vereinbares Volumen und einen damit kompatiblen Werkstoff aufweisenden Rohr über dessen Anschlußklemmen (7) in entsprechender Form Strom (mit niedriger Spannung) in Abhängigkeit vom elektrischen Widerstand zum Aufbau der Reaktionstemperatur-Bedingungen im Inneren zugeführt wird, und wobei an dem Rohr dicht und unter elektrischer Isolierung (13, 19) Einrichtungen zur Zuführung (15) von Reaktionsprodukten und Einrichtungen (17) zum Ausleiten (17) der Endprodukte aus der Reaktion angeordnet sind.

2. Thermischer Reaktor nach Anspruch 1, **dadurch gekennzeichnet**, daß er ein Katalysatorteil (9) als Katalysator für die Reaktion aufweist, beispielsweise einen hitzebeständigen Katalysator auf Nickeloxidbasis.

3. Thermischer Reaktor nach einem der Ansprüche 1 und 2, **dadurch gekennzeichnet**, daß das stromdurchflossene Rohr ein Rohr aus hitzebeständiger (feuerfester) Metallegierung in Form eines geschweißten oder im Schleuderguß hergestellten Walzblechs ist.

4. Thermischer Reaktor nach einem der vorhergehenden Ansprüche, **dadurch gekennzeichnet**, daß über die Länge des Rohres Thermoelemente (25) zur Temperaturerfassung so angeordnet sind, daß die Höhe der für die Reaktion geforderten Temperatur genau und ortsbezogen bestimmbar ist, wobei die Temperaturhöhe veränderlich und unter Veränderung der Stromversorgung des Rohres steuerbar ist.

5. Thermischer Reaktor nach einem der vorhergehenden Ansprüche, **dadurch gekennzeichnet**, daß das Rohr (5) von einer wärmeisolierenden Verkleidung (11) umhüllt ist, und daß eine Durchleitung für einen Gasstrom zur Kühlung oder zur Vergleichmäßigung der Temperatur zwischen der Wandung des Rohres (5) und der Isolierverkleidung (11) ausgebildet ist.

6. Thermischer Reaktor nach einem der vorhergehenden Ansprüche, **dadurch gekennzeichnet**, daß er innerhalb oder außerhalb eines Behandlungs- oder Laborofens angeordnet ist, welcher die Reaktionsprodukte aufnimmt und in beliebiger Richtung (vertikal oder horizontal) angeordnet ist.

7. Thermischer Reaktor nach einem der vorhergehenden Ansprüche, **dadurch gekennzeichnet**, daß er im Betrieb auf eine veränderliche Höhe mittels einer Steuereinheit (23) gesteuert wird, welche entsprechend den Einstellwerten, die für kohlenstoffhaltige Atmosphäre (Kohlenstoffpotential für die Wärmebehandlung) gefordert sind und die mit einer oder mehreren Meßsonde(n) (29) bestimmt werden, die Höhe der Temperatur im Inneren des Rohres (5) (gemessen mittels eines Thermoelements 25), die Zuführung des einströmenden Gasgemisches (über Mengenregelschieber 21 für jede gasförmige Reaktionskomponente, Luft und Methan- bzw. Propangas), und gegebenenfalls die Parameter zur Aufrechterhaltung (Rußverbrennung mit angenäherter Häufigkeit) und zur Sicherheit (Stickstoffzuführung) zum Abschalten der Reaktion im Falle von Fehlern oder Überhitzung regelt).
